Europäisches Patentamt

(19) European Patent Office    (11) Publication number:    **0 124 990**

Office européen des brevets    **B1**

(12)    **EUROPEAN PATENT SPECIFICATION**

(45) Date of publication of patent specification: **19.08.87**    (51) Int. Cl.⁴: **F 16 G 3/09, B 21 J 15/14**

(21) Application number: **84302065.2**

(22) Date of filing: **27.03.84**

(54) **Method and apparatus for riveting fasteners to a belt.**

(30) Priority: **28.04.83 US 489372**

(43) Date of publication of application:
**14.11.84 Bulletin 84/46**

(45) Publication of the grant of the patent:
**19.08.87 Bulletin 87/34**

(84) Designated Contracting States:
**DE FR GB**

(56) References cited:
**EP-A-0 069 691**
**FR-A-1 349 604**
**FR-A-2 139 486**
**GB-A- 690 617**
**US-A-3 141 346**
**US-A-3 176 358**
**US-A-3 913 180**
**US-A-4 344 213**

(73) Proprietor: **FLEXIBLE STEEL LACING COMPANY**
**2525 Wisconsin Avenue**
**Downers Grove, IL 60515 (US)**

(72) Inventor: **Musil, Edward Charles**
**4142 Fisherman Terrace**
**Lyons Illinois 60534 (US)**

(74) Representative: **Bayliss, Geoffrey Cyril et al**
**BOULT, WADE & TENNANT 27 Furnival Street**
**London EC4A 1PQ (GB)**

Courier Press, Leamington Spa, England.

## Description

The present invention relates to a method and apparatus for securing rows of belt fasteners by rivets to belt ends.

The method and apparatus of the present invention are particularly directed to installation of fasteners on conveyor belts. Two types of fasteners which are commonly used to join conveyor belt ends are "plate" belt fasteners, examples of which are shown in U.S.—A—3,141,346, and "hinge" belt fasteners, examples of which are shown in U.S.—A—3,742,557 and US—A—3,176,358.

Plate fasteners form a generally rigid, inflexible connection between adjacent belt ends. Hinge fasteners form a pivotal connection. Both types of fasteners are generally made of metal and include upper and lower plates. They are secured to a belt end by placing the belt end between the upper and lower plates and riveting the plates to the belt.

Installation of a rivet generally involves driving a rivet assembly downward through a perforation in an upper fastener plate, through the thickness of the belt, and through a perforation in a lower fastener plate, and then deforming the lower end of the rivet to secure it in place. The belt material is compressed somewhat as the rivets are installed. The preferred rivet assembly typically includes a nail which is pointed at its lower end for piercing the belt and a rivet having a hollow lower end which is adapted to be flared outwardly by a shoulder on the nail, as described in U.S.—A—3,913,180. Deforming the lower end of the rivet while simultaneously compressing the belt material requires a relatively great amount of force, as does piercing the belt material with the nails. Proper installation of the rivets generally involves striking the rivet assembly with a pneumatic hammer or a conventional hammer while the rivet assembly is aligned with the perforations in the fastener plates and maintained substantially perpendicular to the belt.

In the past, riveting fasteners to belt ends has generally been acomplished by manually guiding the rivet assemblies into the perforations in the fasteners and individually driving each rivet assembly with a hammer. Manual alignment of the rivets requires that each rivet assembly be hit relatively softly at first to start it through the belt, then hit harder to force it completely through the belt and deform the lower end of the rivet. Because the belts are generally relatively tough, the impact forces required are substantial. One major disadvantage of installing rivets in this manner is that it is difficult and time-consuming. If a rivet is not kept properly aligned as it is driven, it may fail to seat properly or may bend, requiring it to be pulled out and replaced, which detracts greatly from the efficiency of the operation. An additional disadvantage is that imprecise hammer blows may injure the hands of workers holding the rivets.

The guide block described and illustrated in U.S.—A—4,344,213 has been suggested as an alternative to guiding the rivet assemblies manually as they are being installed. While use of a guide block of this type may reduce or eliminate the safety hazards related to manually guiding the rivets, apparatus of the type described in US—A—4,344,213 has not found wide usage because it is frequently more time-consuming for a skilled riveter to load the guide block and then drive each rivet than simply to drive the rivets while guiding them manually.

EP—A—0069691 discloses an apparatus for attaching fasteners to a belt in which a rivetting gun is mounted on a carriage for movement on a carriageway to a plurality of positions over belt fasteners placed along the edge of a clamped belt. The gun is guided into the desired position by an indexing member which permits actuation of the gun for driving the rivets one by one through the fasteners and belt when in position. The operator does one horizontally aligned row of holes one by one and then adjusts the indexing mechanism to align the gun with a second row of holes which are then completed one by one followed by a further adjustment of the gun and then the operator completes the third row of holes one by one.

FR—A—1349604 discloses an apparatus for rivetting fasteners to belts. The rivets are pre-positioned in perforations in the fasteners and are driven through the fasteners by means of a plurality of drive members supported in a guide means to enable the drive members to be driven simultaneously. The arrangement necessitates careful pre-positioning of the rivets in the fasteners and accurate alignment to receive the guide means and the guide means has to be positioned over the rivets for each and every fastener to be secured to the belt.

Conveyor belts of the type described herein are commonly used in applications where it is desirable that repair of belts be accomplished quickly. For example, such belts are used in mines where time spent in repair of belts presents costly downtime for mining operations. For this reason, there is a continuous need for more time efficient methods and apparatus for securing fasteners to belt ends in connection with on-site repair and replacement of belts.

It is a general object of the present invention to provide an improved apparatus and method of securing belt fasteners to belt ends particularly suitable for use in a working environment in the field.

The invention provides apparatus for use in riveting a row of belt fasteners which have upper and lower plates to a belt end by driving a plurality of elongate rivet assemblies through perforations in said upper and lower fastener plates and through the belt end positioned between said plates, the apparatus comprising, in combination: a base for supporting the belt end and belt fasteners, locking means for maintaining the fasteners in a predetermined position on the base, guide means positioned above the fasteners for guiding rivet assemblies into the perforations in the fastener plates, alignment means for interconnecting the guide means and base in predetermined relation to align the guide means with the perforations in the fastener plates and drive means for driving a rivet assembly in the guide through the perforations in the upper and lower plates of the fastener and the belt therebetween to rivet the plates and belt together, wherein the guide means has a plurality of bores equal to a multiple of the number of perforations through each fastener to receive rivet assemblies, wherein the drive means is a single drive means adapted to drive simultaneously a number of rivet assemblies by impact of a hammer on the drive means, said number of rivet assemblies acted on simultaneously by the drive means also being a multiple of the number of perforations through each fastener.

In one embodiment of the invention the drive means is adapted to drive simultaneously a number of rivet assemblies equal to the number of perforations in each fastener plate.

The drive means may comprise a cap and a plurality of elongated drive rods extending downwardly therefrom to act on the respective rivet assemblies.

More specifically the number of perforations in each belt fastener plate may be equal to the number of drive rods and the drive rods may be arranged in a pattern corresponding to the arrangement of the perforations so that all of the rivet assemblies for a particular belt fastener may be driven simultaneously.

The invention also provides a method for use in sequentially riveting a row of belt fasteners having upper and lower plates to a belt end by driving a plurality of elongated rivet assemblies through perforations in the upper and lower belt fastener plates and a belt end positioned therebetween, comprising the steps of: placing a row of belt fasteners upon a base and securing the fasteners thereon, placing a belt between the upper and lower fastener plates and securing the belt to the base, positioning guide means for a rivet assembly above a first group of adjacent fasteners, locking the guide means in alignment with one perforation through the upper and lower belt fastener plates, loading a rivet assembly in a bore in the guide means and driving the rivet assembly through the aligned perforations in the fastener plates and the belt end therebetween and deforming the lower end of the rivet assembly using an anvil; wherein the guide means have a plurality of vertical bores equal to a multiple of the number of perforations in the upper and lower plates of each fastener, a plurality of rivet assemblies being loaded in the vertical bores of the guide means in alignment with the perforations of said multiple of the number of fasteners, simultaneously driving all of the rivet assemblies in the vertical bores of the guide means for one fastener through the perforations of the fastener plates and the belts end therebetween and deforming the lower ends of the rivet assemblies by said anvil means, without moving said guide means simultaneously driving all of the rivet assemblies in the vertical bores of the guide means for a second fastener from the guide means and through the belt and deforming the rivet assemblies for the second fastener until all the rivet assemblies supported by the guide means have been driven; reloading the guide means with further rivet assemblies and repositioning the guide means in alignment with said multiple of a further number of fasteners for riveting the further fasteners to the belt end.

Thus in accordance with the present invention, plurality of rivet assemblies for securing fasteners to belt ends are disposed within elongated bores in a guide block prior to installation and may be driven simultaneously by a hammer in combination with an impact distributing driver. The driver transmits impact force from a single hammer simultaneously to a group of rivet assemblies. The driver herein comprises a cap with a plurality of elongated drive rods extending downwardly therefrom to be received within the bores of the guide block so that the lower ends of the drive rods contact the upper ends of the rivets. The number of drive rods is preferably equal to the number of rivets for a single fastener. To maintain alignment of the guide block bores with the perforations in the fasteners, novel alignment means is employed to position the guide block precisely in a predetermined position with respect to the base. The bottom of the guide block may be bevelled so as to be substantially coplanar with the upper surfaces of hinge-type fasteners prior to installation of the rivets. The advantages of the present invention are achieved without substantially increasing the amount of equipment beyond that used in the past.

The following is a description of a specific embodiment of the invention, reference being made to the accompanying drawings in which:

Figure 1 is a fragmentary perspective view of apparatus embodying the present invention showing four fasteners in place on the base,

Figure 2 is a perspective view of a guide block assembly and driver in accordance with the present invention,

Figure 3 is a fragmentary plan view of the apparatus of Figure 1 showing four fasteners and a fragmentary portion of a belt end, and not showing the guide block assembly or driver,

Figure 4 is an elevational sectional view of the apparatus of Figure 1 taken substantially along line 4—4 and looking in the direction of the arrows, and

Figure 5 is an elevational sectional view of a fastener which has been riveted to a belt end in accordance with the present invention.

The present invention is generally embodied in a method and apparatus for securing rows of perforated belt fasteners by rivets to belt ends. While the embodiment of the invention hereinafter described and illustrated in the drawings is for securing hinge fasteners to belt ends, it will be understood that the present invention may also be embodied in a method and apparatus for securing plate fasteners to belt ends.

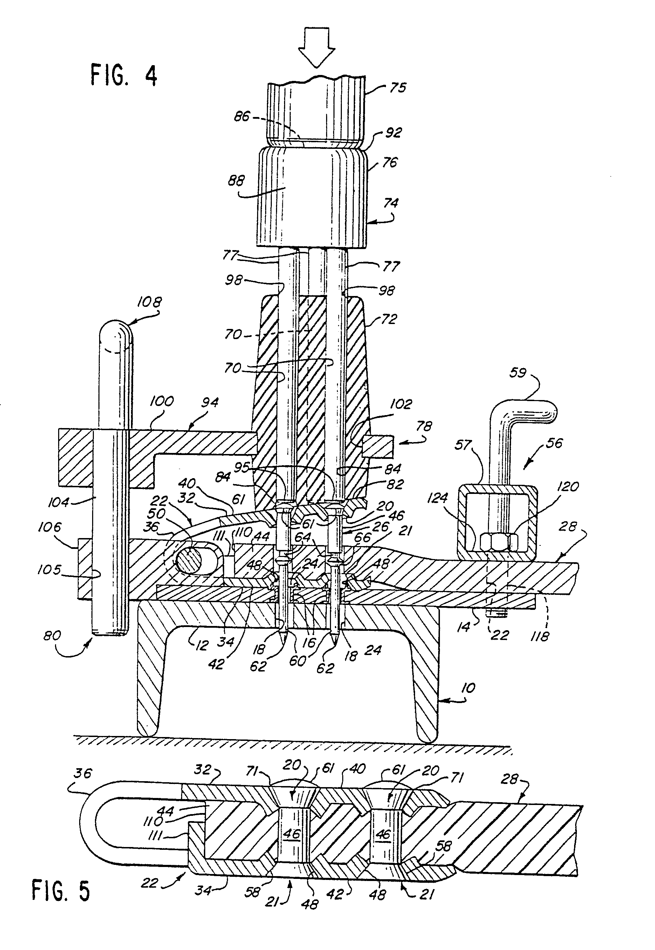

The apparatus herein generally includes a base 10 having a generally horizontal portion 12 which supports a plurality of anvil plates 14. As best seen in Figure 4, apertures 16 and 18 corresponding to countersunk holes or perforations 20 and 21 in the fasteners 22 are formed through the anvil plates 14 and the underlying horizontal portion 12 of the base respectively. Each of the apertures 16 in the anvil plates is substantially centered in a button 24 which comprises a generally circular, upwardly extending rim. As described in greater detail below, each of the apertures and buttons cooperates with one of the rivet assemblies 26 as the rivet assemblies are driven downward.

The width of the belt 28 determines the minimum length of the base 10. The drawings herein illustrate a base segment approximately 12 inches (305 cms) in length made from a length of steel channel. Belts typically have widths of, for example, 24, 42, or 60 inches (610, 1065, 1525 cms).

Each of the hinge-type fasteners 22 herein includes an upper plate 32 and a lower plate 34 which are joined by flexible, generally U-shaped center hinge portions 36 which are adapted to interfit with opposite U-shaped portions of fasteners on an adjacent belt end (not shown) to form a hinge structure to receive a hinge pin (not shown). The countersunk holes or perforations 20, 21 for receiving rivets are formed in a predetermined pattern through each fastener plate 32, 34, the upper fastener plates 32 being countersunk on their top surfaces 40 and the lower fastener plates being countersunk on their bottom surfaces 42. The preferred fastener plates each have five perforations arranged in a W-shaped pattern.

The fasteners are manufactured in rows with their lower plates 34 joined along the sides. The upper plates 32 are not connected to one another. Prior to installation, the upper plates 32 are upwardly inclined from the U-shaped portions 36 to facilitate insertion of the belt end 44 between the upper and lower plates. Installation of the rivets 46 (Figure 4) pushes the upper plates 32 downward, flexing the U-shaped portions 36 so that the belt end 44 is squeezed between the upper and lower plates as shown in Figure 5.

The fasteners 22 are maintained in a predetermined position by engagement of the countersunk portions 48 of the lower fastener plates 34 with the upwardly facing buttons 24 on the anvil plates 14, and are locked into place by a gauge pin 50 which extends through the U-shaped portions 36 of the fasteners 22 and through horizontal bores 52 in lugs 54 on the base. In the illustrated embodiment, each of the lugs 54 has a second bore 55 parallel to the first and may be rotated 180° about a vertical axis to accommodate fasteners of a different size (not shown).

The belt 28 is maintained in position by clamping means 56 which herein comprises a generally horizontal clamping member 57 with screws 59 (Figure 4) at each end for applying downward pressure to the clamping member. The preferred clamping member 57 is a length of square tubing. Each screw 59 comprises a generally L-shaped rod having a threaded portion 118 at its lower end and a nut 120 fixed to it above the threaded portion. The threaded portions 118 of the screws are received in threaded bores 122 in the anvil plates 14 at the corners of the base. Clockwise rotation of the screws 59 forces the nuts 120 downward against the bottom 124 of the tube to clamp the belt in place.

To rivet a row of fasteners 22 to the belt 28, the belt end 44 is inserted between the upper and lower fastener plates 32 and 34, and rivet assemblies 26 are driven downwardly through the perforations 20 in the upper fastener plate, through the thickness of the belt end 44, and through the perforations 21 in the lower fastener plate.

Referring particularly to Figure 4, each of the illustrated rivet assemblies 26 includes a rivet 46 having a hollow lower end for receiving the upper end of an interfitting detachable nail 60. The rivet has a head 61 at its upper end. The nail has a sharpened point 62 at its lower end for piercing the belt material and guiding the rivet assembly through the perforations 20, 21 in the fasteners and apertures 16 in the anvil plates 14, an integral upwardly extending pin at its upper end which fits within the hollow lower end of the rivet 46, and an integral annular shoulder 66 formed just below the pin 64.

As a rivet assembly 26 is driven downward, the shoulder 66 seats in the button 24, arresting the downward progress of the nail 60. As the lower end 58 of the rivet 46 passes through the perforation 21 in the lower fastener plate 34, the upper surface of the button 24 flares the hollow lower end outwardly as described in U.S. patent 4,258,461. As described in greater detail below, the rivet assemblies 26 are aligned and guided as they are driven by a plurality of substantially vertical bores 70 in a guide means 78.

In the past, the rivet assemblies have been driven one at a time, and have generally been guided by hand as they are driven. Driving rivet assemblies in this manner is time-consuming and presents safety hazards.

In accordance with the present invention, an impact distributing driver 74 is employed to transmit impact force from a single hammer 75 simultaneously to a plurality of rivet assemblies disposed within the bores 70 of the guide means 78. The preferred driver 74 includes an impact upper end or cap 76 for receiving hammer blows and a plurality of downwardly extending drive rods 77 which are fixed at their upper ends to the cap and adapted to be received within the bores 70 of the guide block 72. The drive rods are preferably arranged in a group corresponding to a group of perforations 20, 21 in a single fastener plate 32, 34 so that all of the rivet assemblies 26 for a particular fastener 22 may be driven simultaneously. The guide block 72 is part of the guide means or block assembly 78 which preferably includes alignment means 80 for maintaining the guide block in one of a plurality of predetermined positions with respect to the base 10. The bottom 82 of the guide block 72 may be beveled so that the lower ends 84 of the bores 70 are all directly adjacent their associated perforations 20 in the inclined upper fastener plate 32 with no substantial gap therebetween.

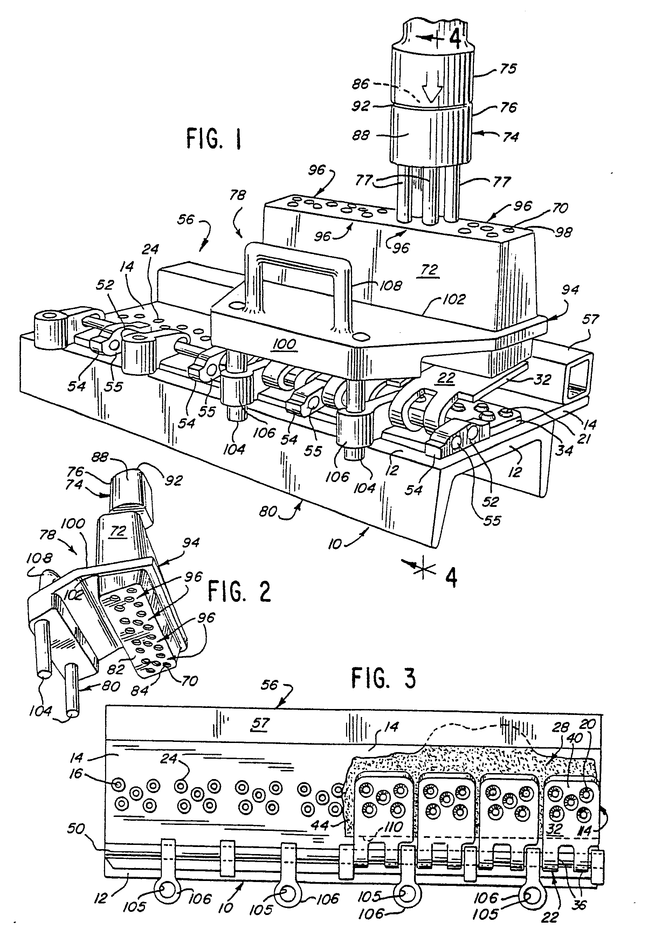

Turning now to a more detailed description of the illustrated embodiment of the present invention, the cap 76 is preferably metallic and has a generally planar top surface 86 for receiving hammer blows. The cap 76 has a peripheral surface 88 which is generally cylindrical except for a flat portion 90 (Figure 2) which permits the driver to be placed on an inclined surface between uses without rolling and provides a visual aid to facilitate proper orientation of the driver. A rounded edge 92 is formed at the intersection of the top surface 86 and the peripheral surface 88.

In the illustrated embodiment, the drive rods 77 are arranged in a generally W-shaped group corresponding to a standard arrangement of perforations in hinge fasteners. The drive rods 77 herein are generally cylindrical. Their upper ends are held in cavities (not shown) formed in the bottom of the cap 76, and their lower ends 95 are chamfered to facilitate their insertion into the bores 70 of the guide block 72. The cap and drive rods are preferably made of hardened steel.

The preferred guide block 72 is made of a high modulus elastomer and supported in a relatively rigid frame 94. The bores 70 are arranged in a plurality of groups 96. Each group 96 corresponds to the apertures 20, 21 in a single fastener plate 32, 34. The upper ends 98 of the bores are countersunk to facilitate insertion of the rivet assemblies 26 from above.

The bores 70 are dimensioned to provide an interference fit with the annular shoulders 71 (Figure 5) of the rivet assemblies 26 so that the rivet assemblies may be retained within the bores prior to being driven. The elasticity of the block permits the rivet assemblies 26 to be driven through the bores 70 with relatively little resistance.

The frame 94 which supports the block 72 comprises a metal body 100 having a generally rectangular opening 102 (Figure 4) to accommodate the block and including alignment means 80 to provide precise positioning of the guide block relative to the base 10. The preferred alignment means 80 comprises a pair of downwardly extending rods 104 which are received in a close sliding fit within vertical bores 105 in collars 106 fixed to the base 10. A handle 108 extends upwardly from the body 100 to facilitate manual shifting of the guide block assembly.

In the illustrated embodiment, the guide block 72 has four groups 96 of bores 70 formed in it so that four fasteners 22 may be riveted without shifting the guide block assembly 78. The collars 106 are positioned at evenly spaced intervals equal to two fastener widths along the base 10, and the alignment rods 104 on the frame 94 are spaced by substantially the same interval, so that the guide block may be conveniently shifted between sets of four fasteners.

Turning now to the method of the present invention, the method generally comprises the steps of positioning the fasteners 22 on the base 10, inserting the belt end 44 between the upper and lower fastener plates 32 and 34, and successively driving groups of rivet assemblies 26 downward through the fasteners and belt end.

The first step is to place a row of fasteners 22 on the anvil plates 14. The engagement between the upwardly extending buttons 24 on the anvil plates 14 and the countersunk portions 48 of the lower fastener plates 34 enables the fasteners 22 to be readily positioned on the base 10 so that the U-shaped portions 36 of the fasteners 22 and the horizontal bores 52 of the lugs 54 are substantially aligned. The gauge pin 50 is then inserted through the U-shaped portions and the bores to lock the fasteners 22 in place. Once the row of fasteners has been thus secured, the belt end 44 and guide block 72 may be positioned. The belt end 44 is inserted under the clamping bar 57 and between the upper and lower fastener plates 32 and 34, and pushed forward until its leading edge 110 abuts a row of tabs 111 which extend upwardly from the lower plates 34. The screws 59 are then turned so that the clamping bar 57 descends to secure the belt 28 in place.

The guide block assembly 78 is positioned in any of a plurality of predetermined positions by inserting the alignment rods 104 into a pair of adjacent collars 106 and lowering the guide block 72 so that the bottom 82 of the guide block rests on a set of fasteners. The rivet assemblies 26 may be loaded into the guide block 72 prior to positioning it above the fasteners 22, or in the alternative may be loaded after the guide block 72 is in position.

In accordance with the present invention, a plurality of rivet assemblies 26 are then driven simultaneously. To this end, the driver 74 is positioned above the guide block 72 and the drive rods 77 are inserted downwardly into a plurality of the vertical bores 70. Downward impact forces are applied to the upper cap surface 86 by a hammer 75 or the like to drive the rivet assemblies 26 downward until the shoulders 66 seat in the buttons 24 and the lower ends 58 (Figure 5) of the rivets 46 are flared outward. In the preferred embodiment of the invention, the drive rods 77 correspond in number and position to the perforations 20 in a single fastener plate 32 so that all of the rivets 46 for a particular fastener may be driven simultaneously.

It is clear that the driver 74 need not be held with one hand while the hammer 75 is being wielded by the other hand. Often workers hit their fingers if they must hold the driver. Also, when workers hold the driver, they usually apply lighter blows in fear of hitting themselves. But with the five drive rods 77, the driver 74 is clearly held stable, as shown in Figure 4 by the guide block 72 and a very heavy blow from a very large and heavy hammer can be delivered. This speeds the riveting process.

The standard hinge fasteners 22 illustrated and described herein have five apertures arranged in a W-shaped group 114 on each plate 32, 34. It will be appreciated that the method and apparatus of the present invention may have various embodiments for use with different types of fasteners having various numbers of perforations arranged in various patterns. It will also be appreciated that the driver could be configured to drive less than the total number of rivets for a single fastener, or could be configured to drive a multiple of that number so that more than one fastener could be secured without shifting the driver between positions.

After securing one fastener 22 to the belt end 44, the driver 74 is removed from the guide block 72 and shifted to the next group 96 of bores 70 to secure a second fastener 22 to the belt. This is repeated until an entire set of fasteners have been secured to the belt end 44. In the illustrated embodiment there are four fasteners in a set. At that point, the guide block assembly 78 is lifted to remove the alignment rods 104 from their associated collars 106 and the assembly 78 is shifted to a second position to rivet a second set of four fasteners to the belt end. The above steps are generally repeated until fasteners 22 have been secured to the belt end 44 across its entire width.

To speed the operation, several guide block assemblies 78 may be used with a second person off loading one guide block assembly with rivet assemblies 26 while another person is hammering the rivet assemblies into the belt from the guide block assembly 78 positioned on the base 10. Thus, as soon as four belt fasteners have been secured in position another preloaded guide block assembly may be positioned in place on the base 10 and the empty guide block assembly may be removed for loading with rivet assemblies by the second person while the first continues the hammering and riveting operation. Naturally, several guide block assemblies may be mounted on the base at one time; and the person doing the off loading of rivet assemblies into the guide block assemblies may load several of them before attaching them to the base and then removing several of the now empty guide block assemblies from the base 10. Another way to achieve a fast operation is to provide a row of guide block assemblies extensive enough to extend across the entire belt width and to have each of them preloaded with rivet assemblies 26. Then, the person hammering can go down the row of block assemblies 78 and continuously hammer without having to stop and shift a block assembly or to load rivet assemblies into a block assembly. The speed and ease of operation in the field under adverse conditions and/or where conveyor down time is extremely costly makes most attractive the use of multiple guide block assemblies preloaded with rivet assemblies.

The use of the driver 74 and guide block 72 as described above provides clear advantages in that it permits a plurality of rivet assemblies 26 to be driven faster than did prior methods and eliminates safety hazards associated with guiding the rivet assemblies manually. An additional advantage derives from the fact that all of the rivets for a particular fastener are driven simultaneously.

In accordance with the present invention, all of the rivet assemblies 26 enter the perforations 20 in the upper fastener plate 32 directly from the bores 70 of the guide block 72 without having an opportunity to stray from their proper paths.

From the foregoing it will be appreciated that a novel method and apparatus are provided for on-site installation of fasteners on belt ends. The method and apparatus of the present invention enable belt fasteners to be riveted to belt ends more quickly, efficiently, and safely than in the past without substantially increasing the amount of equipment required for the job.

## Claims

1. Apparatus for use in riveting a row of belt fasteners (22) which have upper and lower plates (32, 34) to a belt end (44) by driving a plurality of elongate rivet assemblies (26) through perforations (20, 21) in said upper and lower fastener plates (32, 34) and through the belt end positioned between said plates, the apparatus comprising, in combination: a base (10) for supporting the belt end and belt fasteners, locking means (50) for maintaining the fasteners in a predetermined position on the base, guide means (78) positioned above the fasteners for guiding rivet assemblies into the perforations in the fastener plates, alignment means (80) for interconnecting the guide means and base in predetermined relation to align the guide means with the perforations (20, 21) in the fastener plates and drive means (74) for driving a rivet assembly in the guide through the perforations in the upper and lower plates of the fastener and the belt therebetween to rivet the plates and belt together, characterised in that the guide means (78) has a plurality of bores (70) equal to a multiple of the number of perforations through each fastener to receive rivet assemblies, and in that the drive means is a single drive means (74) adapted to drive simultaneously a number of rivet assemblies (26) by impact of a hammer (25) on the drive means, said number of rivet assemblies acted on simultaneously by the drive means also being a multiple of the number of perforations (20, 21) through each fastener (32, 34).

2. Apparatus in accordance with claim 1, characterised in that the drive means is adapted to drive simultaneously a number of rivet assemblies equal to the number of perforations in each fastener plate.

3. Apparatus in accordance with claim 1, or claim 2, characterised in that the drive means comprises a cap (76) and a plurality of elongated drive rods (77) extending downwardly therefrom to act on the respective rivet assemblies.

4. Apparatus in accordance with claim 3, characterised in that the number of perforations (20, 21) in each belt fastener plate (32 or 34) is equal to the number of drive rods (77), and the drive rods are arranged in a pattern corresponding to the arrangement of the perforations so that all of the rivet assemblies for a particular belt fastener may be driven simultaneously.

5. Apparatus in accordance with any of claims 1 to 4, characterised in that the alignment means (80) comprises a plurality of substantially vertical rods (140) fixed to the guide means (78) and extending downwardly therefrom, and a plurality of collars 106 fixed to the base and having substantially vertical bores (105) for receiving the rods with a close sliding fit.

6. Apparatus in accordance with any of claims 1 to 5 and where the fasteners (22) are hinge-type fasteners having upper and lower plates (32, 34) joined by generally U-shaped members (36) such that the upper plates of the fasteners are inclined upwardly prior to driving of the rivet assemblies, characterised in that the guide means (78) modules a guide block (72) having a lower surface (82) which is bevelled so as to lie flush against an upwardly inclined upper fastener plate (32) before the rivet assemblies are driven.

7. An apparatus in accordance with any of the preceding claims, characterised in that anvil means (14) are provided on said base (10) for upsetting the rivet ends (58) and clamping means (57) are provided for clamping the belt to the base.

8. A method for use in sequentially riveting a row of belt fasteners (22) having upper and lower plates to a belt end (44) by driving a plurality of elongate rivet assemblies (26) through perforations (20, 21) in the upper and lower belt fastener plates (32, 34) and through a belt end (44) positioned therebetween comprising the steps of: placing a row of belt fasteners upon a base (10) and securing the fasteners thereon, placing a belt (28) between the upper and lower fastener plates and securing the belt to the base, positioning guide means (78) for a rivet assembly above a first group of adjacent fasteners, locking the guide means in alignment with one perforation (20, 21) through the upper and lower belt fastener plates, loading a rivet assembly in a bore (70) in the guide means and driving the rivet assembly through the aligned perforations in the fastener plates (32, 34) and the belt end therebetween and deforming the lower end (46) of the rivet assembly using an anvil (14); characterised in that the method comprises the further steps of loading a plurality of rivet assemblies (26) equal to a multiple of the number of perforations (20, 21) in each fastener in the guide means in alignment with the perforations of said multiple driving all of the rivet assemblies in the guide means for one fastener through the perforations of the fastener plates (22) and belt end (44) therebetween, deforming the lower ends (46) of the rivet assemblies (26) by said anvil means (14), and then, without moving said guide means (78), simultaneously driving all of the rivet assemblies in the guide means for a second fastener from the guide means through the second fastener and belt and deforming the rivet assemblies for the second fastener and repeating driving of the rivet assemblies from the guide means until all the rivet assemblies supported by the guide means have been driven and then reloading the guide means with further rivet assemblies and repositioning the guide means in alignment with said multiple of a further number of fasteners for riveting the further fasteners to the belt end and repeating the operation until all of the fasteners have been secured to the belt end.

**Patentansprüche**

1. Vorrichtung zur Verwendung beim Vernieten einer Reihe von eine obere und eine untere Platte (32, 34) aufweisenden Riemenverbindern (22) mit einem Riemenende (44) durch Einbringen einer Vielzahl von langgestreckten Nieteneinrichtungen (26) durch Perforationen (20, 21) in der oberen und unteren Verbinderplatte (32, 34) und in das zwischen den Platten befindliche Riemenende mit einer Basis (10) zur Halterung des Riemenendes und der Riemenverbinder, einer Feststelleinrichtung (50) zum Feststellen der Verbinder in einer vorgegebenen Stellung auf der Basis, einer über den Verbindern angeordneten Führungseinrichtung (78) zur Führung der Nieteneinrichtungen in die Perforationen in den Verbinderplatten, einer Ausrichteinrichtung (80) zur Verbindung der Führungseinrichtung und der Basis in einer vorgegebenen relativen Lage zwecks Ausrichtung der Führungseinrichtung zu den Perforationen (20, 21) in den Verbinderplatten und mit einer Treibereinrichtung (74) zum Eintreiben einer Nieteneinrichtung in die Führung durch die Perforationen in der oberen und unteren Platte des Verbinders und des sich zwischen diesen befindenden Riemens zwecks Zusammennietens der Platten und des Riemens, dadurch gekennzeichnet, daß die Führungseinrichtung (78) eine Vielzahl von Bohrungen (70) aufweist, deren Anzahl gleich einem Vielfachen der Anzahl von Nieteneinrichtungen aufnehmenden Perforationen in jedem Verbinder ist, und daß die Treibereinrichtung eine einzige Treibereinrichtung (77) ist, die zum gleichzeitigen Eintreiben einer Anzahl von Nieteneinrichtungen (26) durch Aufschlagen eines Hammers (25) auf sie dient, wobei die Anzahl von Nieteneinrichtungen, auf welche die Treibereinrichtung gleichzeitig einwirkt, ebenfalls ein Vielfaches der Anzahl von Perforationen (20, 21) in jedem Verbinder (32, 34) ist.

2. Vorrichtung nach Anspruch 1, dadurch gekennzeichnet, daß die Treibereinrichtung zum gleichzeitigen Eintreiben einer Anzahl von Nieteneinrichtungen dient, welche gleich der Anzahl von Perforationen in jeder Verbinderplatte ist.

3. Vorrichtung nach Anspruch 1 oder 2, dadurch gekennzeichnet, daß die Treibereinrichtung eine Kappe (76) sowie eine Vielzahl von langgestreckten Treiberstäben (77) aufweist, welche sich zwecks Einwirkung auf die entsprechenden Nieteneinrichtungen von der Kappe nach unten erstrecken.

4. Vorrichtung nach Anspruch 3, dadurch gekennzeichnet, daß die Anzahl von Perforationen (20, 21) in jeder Riemenverbinderplatte (32 oder 34) gleich der Anzahl von Treiberstäben (77) ist und daß die Treiberstäbe in einem Raster angeordnet sind, das dem Raser der Perforationen entspricht, so daß alle Nieteneinrichtungen für einen bestimmten Riemenverbinder gleichzeitig eingetrieben werden können.

5. Vorrichtung nach den Ansprüchen 1 bis 4, dadurch gekennzeichnet, daß die Ausrichteinrichtung (8) eine Vielzahl von im wesentlichen vertikalen Stäben (14), die an der Führungseinrichtung (78) befestigt sind und sich von dieser nach unten erstrecken, sowie eine Vielzahl von an der Basis befestigten und im wesentlichen vertikale Bohrungen (105) aufweisende Hülsen (106) aufweist, in welche die Stäbe gleitend eingepaßt sind.

6. Vorrichtung nach den Ansprüchen 1 bis 5, bei der die Verbinder (22) gelenkartige Verbindungen sind, bei denen die oberen und unteren Platten (32, 34) durch generell U-förmige Elemente (36) derart verbunden sind, daß die oberen Platten der Verbinder vor dem Eintreiben der Nieteneinrichtungen nach oben geneigt sind, dadurch gekennzeichnet, daß die Führungseinrichtung (78) einen Führungsblock (72) mit einer unteren Fläche (82) aufweist, welche so abgeschrägt ist, daß sie vor dem Eintreiben der Nieteneinrichtungen bündig an der oberen Verbinderplatte (32) anliegt.

7. Vorrichtung nach den vorhergehenden Ansprüchen, dadurch gekennzeichnet, daß auf der Basis (10) eine Amboßeinrichtung (14) zum Stauchen der Nietenenden (58) vorgesehen ist und daß eine Klemmeinrichtung (57) zum Festklemmen des Riemens an der Basis vorgesehen ist.

8. Verfahren zur Verwendung beim sequentiellen Vernieten einer Reihe von eine obere und eine untere Platte aufweisenden Riemenverbindern (32) mit einem Riemenende (44) durch Eintreiben einer Vielzahl von langgestreckten Nieteneinrichtungen (26) in Perforationen (20, 21) in den oberen und unteren Riemenverbinderplatten (32, 34) und in ein zwischen diesen angeordnetes Riemenende (44) mit folgenden Schritten: Aufsetzen einer Reihe von Riemenverbindern auf einer Basis (10) und Befestigen der Verbindern auf dieser, Einsetzen eines Riemens (28) zwischen die oberen und unteren Befestigungsplatten und Befestigen des Riemens an der Basis, Einstellen einer Führungseinrichtung (80) für eine Nieteneinrichtung oberhalb einer ersten Gruppe von benachbarten Verbindern, Feststellen der Führungseinrichtung in ausgerichteter Stellung zu einer Perforation (20, 21) in den oberen und unteren Riemenverbinderplatten, Einsetzen einer Nieteneinrichtung in eine Bohrung (70) in der Führungseinrichtung und Eintreiben der Nieteneinrichtung in die zueinander ausgerichteten Perforationen in den Verbinderplatten (32, 34) und in das zwischen diesen befindliche Riemenende sowie Deformieren des unteren Endes (46) der Nieteneinrichtung unter Verwendung eines Amboß (14), dadurch gekennzeichnet, daß das Verfahren folgende weitere Schritte aufweist, Einbringen einer Vielzahl von Nieteneinrichtungen (26), deren Anzahl gleich einem Vielfachen der Anzahl von Perforationen (20, 21) in jedem Verbinder ist, in die Führungseinrichtung, ausgerichtet zu den Perforationen, Eintreiben aller Nieteneinrichtungen in die Führungseinrichtung für einen Verbinder in die Perforationen der Verbinderplatten (22) und das Riemenende (44), Deformieren der unteren Enden (46) der Nieteneinrichtungen (26) durch den Anker (14), nachfolgendes Eintreiben aller Nieteneinrichtungen in der Führungseinrichtung für einen zweiten Verbinder von der Führungseinrichtung in den zweiten Verbinder und den Riemen sowie Deformierung der Nieteneinrichtungen für den zweiten Verbinder ohne Bewegen der Führungseinrichtung (78), Wiederholen des Eintreibens der Nieteneinrichtungen aus der Führungseinrichtung, bis alle von der Führungseinrichtung gehalterten Nieteneinrichtungen eingetrieben sind, sowie nachfolgendes Einbringen von weiteren Nieteneinrichtungen in die Führungseinrichtung und erneutes Einstellen der Führungseinrichtung ausgerichtet zu dem Vielfachen einer weiteren Anzahl von Verbindern zwecks Vernietung der weiteren Verbinder mit dem Riemenende sowie Wiederholen der Maßnahmen, bis alle Verbinder am Riemenende befestigt sind.

**Revendications**

1. Appareil destiné au rivetage d'une rangée d'organes de fixation (22) comportant des plaques supérieure et inférieure (32, 34) à une extrémité de courroie (44) par entraînement d'une pluralité d'ensembles de rivets (26) allongés à travers les perforations (20, 21) dans lesdites plaques de fixation supérieure et inférieure et à travers la partie terminale de courroie placée entre lesdites plaques, l'appareil comprenant, en combinaison: une base (10) pour supporter la courroie et les organes de fixation de courroie, des moyens de verrouillage (50) pour maintenir les organes de fixation dans une position prédéterminée sur la base, des moyens de guidage (78) placés au-dessus des organes de fixation pour guider les ensembles de rivets dans les perforations des plaques de fixation, des moyens d'alignement (80) pour interconnecter les moyens de guidage et la base en relation prédéterminée pour aligner les moyens de guidage avec les perforations (20, 21) dans les plaques de fixation et les moyens d'entraînement (74) pour entraîner un ensemble de rivets dans le guide à travers les perforations dans les plaques supérieure et inférieure de l'organe de fixation et la courroie placée entre elles en vue de riveter ensemble les plaques et la courroie, caractérisé en ce que les moyens de guidage (78) comportent une pluralité d'alésages (70) égale à un multiple du nombre de perforations de chaque organe de fixation pour recevoir les ensembles de rivets, et en ce que le moyen d'entraînement est un moyen d'entraînement unique (74) adapté à entraîner simultanément un nombre d'ensembles de rivets (26) par impact d'un marteau (25) sur le moyen d'entraînement, ledit nombre d'ensembles de rivets actionné simultanément par le moyen d'entraînement étant aussi un multiple du nombre de perforations (20, 21) traversant chaque organe de fixation (32, 34).

2. Appareil selon la revendication 1, caractérisé en ce que le moyen d'entraînement est adapté à entraîner simultanément un nombre d'ensembles de rivets égal au nombre de perforations dans chaque plaque de fixation.

3. Appareil selon la revendication 1 ou 2, caractérisé en ce que le moyen d'entraînement comprend un chapeau (76) et une pluralité de tiges d'entraînement allongées (77) s'étendant vers le bas oour agir sur les ensembles de rivets respectifs.

4. Appareil selon la revendication 3, caractérisé en ce que le nombre de perforations (20, 21) dans chaque plaque de fixation de courroie (32 ou 34) est égal au nombre de tiges d'entraînement (77), et que des tiges d'entraînement sont agencées en un réseau correspondant à la disposition des perforations de sorte que tous les ensembles de rivets pour un organe particulier de fixation de courroie puissent être entraînés simultanément.

5. Appareil selon une quelconque des revendications 1 à 4, caractérisé en ce que le moyen d'alignement (80) comprend une pluralité de tiges sensiblement verticales (140) fixées aux moyens de guidage (78) en en partant vers le bas, et une pluralité de colliers (106) fixés à la base et ayant des alésages (105) sensiblement verticaux pour recevoir les tiges à emboîtement serré.

6. Appareil selon une quelconque des revendications 1 à 5 et où les organes de fixation (22) sont du type à charnière ayant des plaques supérieure et inférieure (32, 34) réunies par des organes (36) de forme générale en U, de sorte que les plaques supérieures des organges de fixation sont inclinées vers le haut avant l'entraînement des ensembles de rivets, caractérisé en ce que le moyen de guidage (78) module un bloc guide (72) ayant une surface inférieure (82) qui est chanfreiné de manière à affleurer contre une plaque de fixation supérieure inclinée (32) avant un entraînement à des ensembles de rivets.

7. Appareil selon une quelconque des revendications précédentes, caractérisé en ce que les moyens d'enclume (14) sont prévus sur ladite base (10) pour relever les extrémités des rivets (58) et des moyens de serrage (57) sont prévus pour serrer la courroie sur la base.

8. Procédé destiné au rivetage séquentiel d'une rangée d'organes de fixation (22) ayant des plaques supérieure et inférieure à une extrémité de courroie (44) par entraînement d'une pluralité d'ensembles de rivets allongés (26) à travers des perforations (20, 21) dans les plaques de fixation de courroie supérieure et inférieure (32, 34) et à travers une extrémité de courroie (44) placée entre elles comprenant les opérations consistant à placer une rangée d'organes de fixation de courroie sur une base (10) et à y fixer les organes de fixation, à placer une courroie (28) entre les plaques de fixation supérieure et inférieure et à fixer la courroie sur la base, à positionner un moyen de guidage (78) pour un ensemble de rivets au-dessus d'un premier groupe d'organes de fixation adjacents, à verrouiller le moyen guide en alignement avec une perforation donnée (20, 21) à travers les plaques de fixation de courroie supérieure et inférieure, à charger un ensemble de rivets dans un alésage (70) dans le moyen guide et à entraîner l'ensemble de rivets à travers les plaques de fixation (32, 34) et l'extrémité de courroie placée entre elles et à déformer l'extrémité inférieure (46) de l'ensemble de rivets utilisant une enclume (14), caractérisé en ce que le procédé comprend les opérations additionnelles de chargement d'une pluralité d'ensembles de rivets (26) égale à un multiple du nombre de perforations (20, 21) dans chaque organe de fixation dans le moyen guide en alignement avec les perforations dudit entraînement multiple de tous les ensembles de rivets dans le moyen guide pour un organe de fixation à travers les perforations des plaques de fixation (22) et l'extrémité de courroie (44) placée entre elles, à déformer les extrémités inférieures (46) des ensembles de rivets (26) par ledit moyen enclume (14), et ensuite, sans déplacement dudit moyen de guidage (78), à entraîner simultanément tous les ensembles de rivets dans le moyen guide pour un second organe de fixation du moyen guide à travers le second organe de fixation et la courroie et à déformer les ensembles de rivets pour la second organe de fixation et à répéter l'entraînement des ensembles de rivets à partir du moyen guide jusqu'à ce que tous les ensembles de rivets supportés par le moyen guide ont été entraînés, et à recharger ensuite le moyen guide avec d'autres ensembles de rivets et à repositionner le moyen guide en alignement avec la multiplicité d'un autre nombre d'organes de fixation pour riveter les autres organes de fixation à l'extrémité de courroie et à répéter l'opération jusqu'à ce que tous les organes de fixation ont été fixés sur l'extrémité de courroie.

FIG. I

FIG. 2

FIG. 3

**0  124  990**

FIG. 4

FIG. 5

2